Europäisches Patentamt

European Patent Office

Office européen des brevets

(11) Veröffentlichungsnummer: **0 087 663**
**B1**

(12) **EUROPÄISCHE PATENTSCHRIFT**

(45) Veröffentlichungstag der Patentschrift:
**24.02.88**

(21) Anmeldenummer: **83101376.8**

(22) Anmeldetag: **12.02.83**

(51) Int. Cl.⁴: **A 01 G 7/04,** A 01 G 25/00

(54) **Anlage zum Aufbau eines elektrischen Feldes.**

(30) Priorität: **16.02.82 CH 961/82**

(43) Veröffentlichungstag der Anmeldung:
**07.09.83 Patentblatt 83/36**

(45) Bekanntmachung des Hinweises auf die Patenterteilung:
**24.02.88 Patentblatt 88/8**

(84) Benannte Vertragsstaaten:
**AT BE CH DE FR GB IT LI NL SE**

(56) Entgegenhaltungen:
**FR-A-693 414**
**FR-A-2 403 424**

(73) Patentinhaber: **ELTAC Nogler & Daum KG,
Speckbacherstrasse 29, A-6020 Innsbruck (AT)**

(72) Erfinder: **Oppitz, Hans, Heidestrasse 40, A-6060
Mils (AT)**

(74) Vertreter: **Rau, Manfred, Dr. Dipl.- Ing., Rau &
Schneck, Patentanwälte Königstrasse 2, D-8500
Nürnberg 1 (DE)**

## Beschreibung

Die Erfindung betrifft eine Anlage zum Aufbau eines elektrischen Feldes im Erdboden nach dem Oberbegriff von Anspruch 1.

Es wurde bereits vorgeschlagen, im Erdboden ein elektrisches Feld aufzubauen (vgl. DE-C-25 03 670), indem Elektroden in das Erdreich eingelagert werden, um beispielsweise bei zu niederem natürlichen Grundwasserstand beziehungsweise zu schlechter Kapillarwirkung des Erdreiches eine gezielte Bewegung des Grundwassers zu bewirken.

Weiterhin ist es bekannt, Elektroden aus Polytetrafluoräthylen (PTFE) zu verwenden, das mit leitfähigen korrosionsbeständigen und elektrolytisch resistenten Materialien gefüllt ist. Diese Materialien können durch Kohlenstoff, z.E. Kunstkohle, Graphit oder Ruß gefüllt sein.

Eine gattungsgemäße Anlage ist aus der FR-A-24 02 424 bekannt. Die Elektroden dieser vorbekannten Anlage werden durch Metalldrähte oder durch ein Netz von Metalldrähten gebildet und weisen dementsprechend keine hinreichende mechanische und chemische Widerstandsfähigkeit auf.

Der Erfindung liegt die Aufgabe zugrunde, eine Anlage zum Aufbau eines elektrischen Feldes der bekannten Art zu schaffen, mit der der Aufbau eines großflächigen homogenen elektrischen Feldes möglich ist, welche sowohl im aktiven als auch im passiven Betrieb eingesetzt werden kann, und deren Elektroden eine hohe chemische und mechanische Belastbarkeit aufweisen.

Diese Aufgabe wird gelöst durch den kennzeichnenden Teil von Anspruch 1. Die danach vorgesehenen Werkstoffkombinationen stellen sicher, daß die wenigstens eine Elektrode, vorzugsweise die Kathode, welche flächig verlegt wird, sich durch elektrochemische Prozesse auch bei längerem Betrieb nicht zersetzt, und daß diese Elektrode mechanischen Belastungen, wie sie z. B. beim Befahren mit Traktoren und anderen Bearbeitungsgeräten auftreten, zuverlässig widersteht.

Weitere vorteilhafte Ausgestaltungen geben die Unteransprüche an.

Zum besseren Verständnis der Erfindung wird diese im folgenden anhand der in den Zeichnungen dargestellten Ausführungsbeispiele näher erläutert.

Es zeigen

Fig. 1 eine Anlage in Stirnansicht;

Fig. 2 eine schaubildliche Darstellung einer anders ausgebildeten Anlage, unter Verwendung eines Netzes als Kathode;

Fig. 3 eine Variante einer Anlage zur Wassergewinnung in Trockengebieten mit Netz bzw. rohförmigen Kathoden;

Fig. 4 eine weitere Ausführungsvariante der Anlage mit mehreren Elektroden;

Fig. 5 eine schaubildliche Darstellung einer durch ein Netz gebildeten erfindungsgemäß aufgebauten Elektrode;

Fig. 6 eine Stirnansicht einer erfindungsgemäß ausgebildeten Verteilungsleitung.

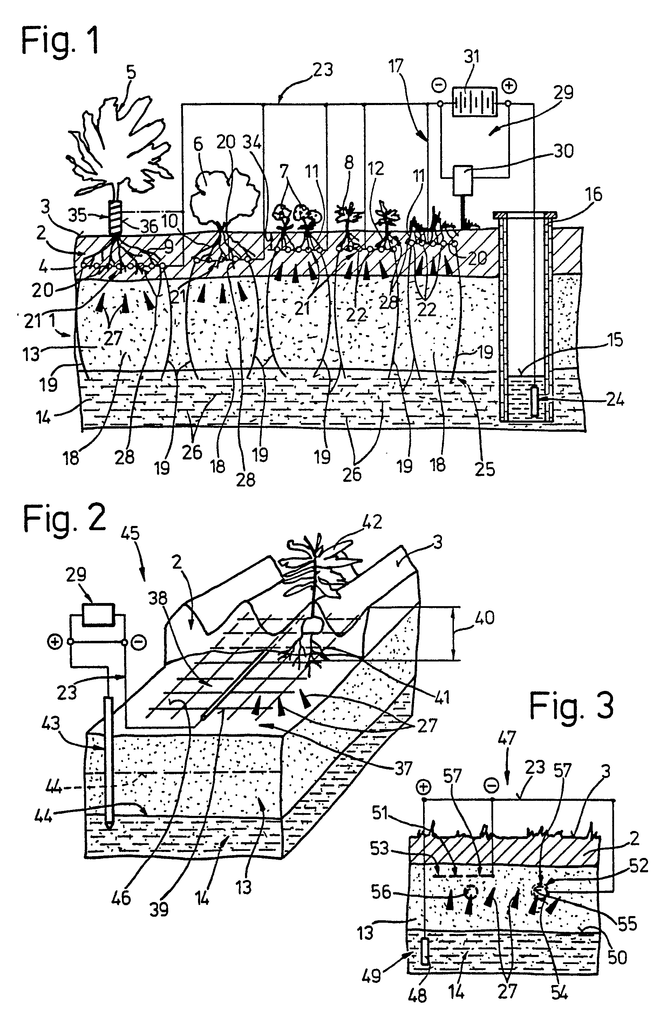

In Figur 1 ist ein Schnitt durch verschiedene Bodenschichten eines Bodens 1, z. B. eines Erdbodens, gezeigt. In einem Vegetationsbereich 2 unterhalb einer Oberfläche 3 ist Humus 4 vorgesehen. Aus diesem Humus 4 beziehen Bäume 5, Sträucher 6, Blumen 7 sowie Gemüsepflanzen 8 über die Wurzeln 9 bis 12 Nährstoffe. Unterhalb dieses Vegetationsbereiches 2 befindet sich ein Bodenbereich 13 aus sandigem und stark wasserdurchlässigen Material, darunter eein wasserführender Bodenbereich 14. Die Höhe der wasserführenden Schichten ist anhand eines Wasserspiegels 15 in einem Brunnen 16 zu ersehen. Um zu verhindern, daß das Oberflächenwasser durch die unterhalb des Vegetationsbereiches 2 befindlichen sandigen Bodenbereiche 13 sofort nach untern absickert bzw. um zu erreichen, daß mit den im Bodenbereich 14 gespeicherten Flüssigkeitsmengen die Wurzeln 8 bis 12 im Vegetationsbereich 2 befeuchtet werden, ist eine Anlage 17 zum Aufbau eines elektrischen Feldes 18, von welchem elektrische Feldlinien 19 dargestellt sind, vorgesehen. Diese Anlage 17 umfaßt mehrere als Kathoden 20 verwendete Elektroden 21, die jeweils aus mehreren einander nahe benachbarten und parallel zueinander verlaufenden Verteilungsleitungen 22 gebildet sind. Die einzelnen Kathoden 20 sind mit einem Leitungssystem 23 zusamengeschaltet, welches die Kathoden 20 mit einer, unter dem Wasserspiegel 15 angeordneten, am positives Potential gelegten Elektrode 24, verbindet. Weist die Elektrode 24 einen hohen Leitwert und einen geringen Übergangswiderstand auf, so führt dies zu einer guten Kontaktierung der im Bodenbereich 14 gespeicherten Flüssigkeitsmengen. Dadurch liegt die gesamte Flüssigkeitsmenge mit dieser Bodenschicht am positiven Potential und bildet die Anode 25. Wird die Anode 25 mit den Kathoden 20 über das Leitungssystem 23 verbunden, so baut sich durch den unterschiedlichen pH-Wert im Vegetationsbereich 2 bzw. im wasserführenden Bodenbereich 14, bedingt durch die Anreicherung von Salzen, in der Flüssigkeit ein Potentialunterschied auf. Dieser Potentialunterschied führt zu einem Aufbau von elektrischen Feldern 18, die zwischen den einzelnen Kathoden 20 sowie der Anode 25 durch Feldlinien 13 schematisch angedeutet sind. Der Aufbau dieser elektrischen Felder 18 bewirkt einen elektroosmotischen Effekt, durch den Wasser 26 aus der Bodenschicht 14 in Richtung des Minuspols, nämlich der Kathoden 20, transportiert wird. Dieser, durch die unterschiedlichen Polaritäten bedingte Wassertransport ist durch Pfeile 27 angedeutet.

Dadurch, daß die Elektroden mehrere parallel zueinander, jedoch nahe benachbarte Verteilungsleitungen 21 umfassen, entstehen breite starke elektrische Felder 18 mit insgesamt geringen Stromstärken, sodaß Beschädigungen der Wurzelenden 28, der Wurzeln 9 bis 12 sowie von Mikroorganismen im Vegetationsbereich 2 vermieden werden.

Um die Wirkung des elektroosmotischen Effektes bzw. die Stärke der elektrischen Felder 18 konstant auf einem vorbestimmten Wert zu halten, ist es möglich, in das Leitungssystem eine Energiequelle 29 zwischenzuschalten. Diese Energiequelle besteht im dargestellten Ausführungsbeispiel aus einer Sonnenenergiezelle 30 und einem Energiespeicher, z. B. einer Batterie 31, die fakultativ zusätzlich für einen Pufferbetrieb in der Nacht vorgesehen sein kann. Vielfach wird jedoch mit der Sonnenenergiezelle 30 das Auslangen gefunden, da der hohe Flüssigkeitsbedarf für die Bäume 5, Sträucher 6, Blumen 7 und Gemüsepflanzen 8 in den Blumenbeeten 32 bzw. in den Gemüsebeeten 33 während der Einstrahlung der Sonne besteht. Zu dieser Zeit wird aber über die Sonnenenergiezelle 30 Fremdenergie den Elektroden 21, 24, nämlich der Kathode 20 und Anode 25, zugeführt, sodaß ein verstärkter Wassertransport in Richtung der Pfeile 27, also zu den Wurzeln 9 bis 12, gegeben ist.

Gleichzeitig wird aber durch die Anordnung der Kathoden 20 erreicht, daß nach Niederschlägen das Oberflächenwasser nicht so rasch in den Bodenbereich 13 absinken kann, da die Kathoden 20 mit der Anode 25 eine sogenannte Horizontalsperre bilden, die einen Wassertransport in zu den Pfeilen 27 entgegengesetzte Richtung verhindern. Damit werden aber auch die an der Bodenoberfläche 3 eingebrachten Düngemittel gemeinsam mit der Feuchtigkeit im Vegetationsbereich 2 gehalten, sodaß den Wurzeln 9 bis 12 ausreichend Nährstoff zugeführt wird. Dies bewirkt ein rascheres Pflanzenwachstum sowie einen höheren Ertrag und ermöglicht es, die Bewässerung von der Bodenoberfläche her zu verringern.

Hierbei hat sich in Blumen- bzw. Gemüsebeeten 32 bzw. 33 gezeigt, daß eine Anordnung der Elektroden 20 in einem Abstand 34 von ca. 20 bis 40 cm unterhalb der Bodenoberfläche 3 eine Trockenhaltung der Erdkrumme an der Bodenoberfläche 3 ermöglicht und einen ausreichenden Wassertransport in den Bereich der Wurzeln 11 und 12 sicherstellt. Bevorzugt wird hierbei zwischen der Anode 25 und den Kathoden 20 durch die Energiequelle 29 eine Spannung von 6 Volt abgegeben und ein Strom von ca. 50 mA eingespeist. Die damit aufgebauten Felder reichen aus, um einen ausreichenden elektroosmotischen Wassertrsnsport von dem Bodenbereich 14 in den Vegetationsbereich 2 zu bewirken.

Ein weiterer Vorteil wird beim Einsatz der Anlage nach Figur 1 in Glashäusern erreicht, die mit wärmedämmenden Glas errichtet worden sind. Die durch die hohe Isolierwirkung des wärmedämmenden Glases zurückgehaltene Wärme bewirkt naturgemäß eine starke Verdünstung des über die Bodenoberfläche 3 den Pflanzen zugeführten Wassers. Dieser Verdunstungsvorgang des Wassers erzeugt wiederum Kälte, die einen überhöhten Aufwand an Heizleistung erfordert. Wird das für die Pflanzen benötigte Wasser nunmehr nicht über die Bodenoberfläche 3, sondern aus tiefer liegenden Bodenbereichen 14 unter Einsatz der Elektroosmose zugeführt, so bleibt die Bodenoberfläche trocken und die Wasserverdunstung wird verringert. Durch die wesentlich geringere Luftfeuchtigkeit in den Glashäusern kann mit weniger Heizenergie das Auslangen gefunden werden und der Pilzbefall wurde verringert.

Wie weiters in Figur 1 schematisch angedeutet, kann zum verstärkten Wassertransport in Bäumen eine Elektrode 35 um einen Stamm des Bäumes 5 verlegt werden. Diese als Kathode 36 geschaltete Elektrode 35 kann über eine Leitung an das Leitungssystem 23 angeschlossen sein. Dadurch wird der Wassertransport nicht nur bis in den Bereich der Wurzeln 9, sondern such innerhalb des Stammes angeregt und es kann der Ertrag, vor allem in Obstkulturen, gesteigert werden.

In Figur 2 ist ein Ausführungsbeispiel gezeigt, bei dem eine eine Elektrode 37 bildende Kathode 38 durch ein Netz 39 gebildet ist. Dieses Netz 39 ist in einer Distanz 40 unterhalb der Bodenoberfläche 3 angeordnet. Das Netz 39 befindet sich im Bereich von Wurzeln 41 einer Pflanze 42 und gewährleistet, daß die Nährstoffe bzw. die Feuchtigkeit im Bereich der Wurzeln 41 gehalten wird und die Bodenoberfläche 3 trocken ist. Die Trockenhaltung der Bodenoberfläche verhindert, daß schädliche Flora und Fauna entsteht. Um Wasser aus dem wasserführenden Bodenbereich 14 in den Vegetationsbereich 2 hochzufördern, - Pfeil 27 - ist die Kathode 38 über ein Leitungssystem 23 mit einer Elektrode 43, beispielsweise einer mit Kohlenstoff gefüllten Kunststoffelektrode, zusammengeschaltet. Wichtig ist bei derartigen Elektroden 43, vor allem wenn sie an positives Potential angelegt werden, daß sie einen hohen Leitwert und einen geringen Übergangswiderstand haben. Werden diese Voraussetzungen erfüllt, so wird eine gute Kontaktierung der umgebenden wasserführenden Bodenschicht 14 erreicht, sodaß die gesamte Bodenschicht 14 als Anode 44 wirkt. Das elektrische Feld wird daher zwischen der, als Anode 44 dienenden Bodenschicht 14 sowie dem Netz 38 hergestellt, wodurch sich eine große Flächenausdehnung des elektrischen Feldes und eine entsprechend starke Feldwirkung ergibt.

Bei der Inbetriebnahme einer derartigen Anlage 45 werden die Kathode 38 bzw. die Anode 44 über eine Energiequelle 29, die durch eine Batterie bzw. einem anderen Stromerzeuger gebildet sein kann, verbunden. Dies bewirkt eine Aktivierung des, sich naturgemäß aus dem pH-Wert-Unterschied zwischen dem wasserführenden Bodenbereich 14 und dem Vegetationsbereich 2 ergebenden Potentialunterschiedes. Dieser Potentialunterschied ist vielfach durch die in der Flüssigkeit gelösten Salze im Bodenbereich 14 gegenüber dem Vegetationsbereich 2 gegeben. Wird am Beginn eines derartigen elektroosmotischen Verfahrens durch Zufuhr von Fremdenergie ein kräftiges elektrisches Feld aufgebaut, so wandert die Feuchtigkeit 44 durch den Bodenbereich 13 in Richtung auf den Vegetationsbereich 2 und somit verlagert sich auch die Anode 44, wie mit strichlierten Linien angedeutet, in Richtung zur Bodenoberfläche 3. Wird dann nach der Anlaufphase die Fremdspannungszufuhr unterbrochen, so ist durch den geringeren Abstand zwischen der Anode 44 und der Kathode 38 ein intensiverer passiver Betrieb möglich, da durch die Potentialunterschiede zwischen dem Wasser, welches einen höheren Leitwert aufweist, und dem Vegetationsbereich 2 ein intensives Feld aufgebaut wird, in dem es zu einem Stromfluß kommt, der den osmotischen Wassertransport in Richtung der Wurzeln 41 der Pflanzen 42 bewirkt.

Wie ersichtlich, hat die als Netz 35 ausgebildete Katode 38 den Vorteil, daß die Wurzeln 41 der Pflanzen 42 durch die Öffnungen 46 des Netzes 39 hindurchtreten. Die Wurzeln können sich daher ungestört ausbreiten und am großflächigen Netz 39 werden auch die Schwermetallionen, die sich im Erdboden befinden, abgeschieden. Die feinen Wurzeln 41 werden durch die Metallionen daher nicht geschädigt.

Um den einzelnen zu fördernden Pflanzen bzw. Bäumen und dgl. zu entsprechen, kann die Maschenweite des Netzes 39 auf die unterschiedlichsten Anwendungsfülle abgestellt werden.

Der überraschende Vorteil beim Einsatz eines Netzes als Kathode liegt aber vor allem darin, daß ein großflächiges elektrisches Feld aufgebaut wird, in dem annähernd gleiche elektrische Verhältnisse herrschen, sodaß ein einheitlicher Wassertransport in Richtung der Pfeile 27 ohne eine Zerstörung von Wurzeln durch zu hohe Stromstärken erreicht wird.

In Garten- und Gemüsekulturanlagen bewirkt die Anwendung der Anlage die Verringerung von Begiessungen, und zwar sowohl hinsichtlich Menge wie auch Frequenz derselben, Verringerung der Düngung, da die Düngemittel jetzt nicht mehr so leicht aus dem Vegetationsbereich ausgeschwemmt werden, sowie die Abnahme der Schwermetallkonzentration im Boden wegen der elektrochemischen Abscheidung der entsprechenden Ionen an der verlegten negativen Elektrode. Bei derartigen Anwendung wird vorteilhafterweise ein relativ grobmaschiges Gitter verlegt, welches den Durchtritt der Wurzeln der Anpflanzungen erlaubt. Die Lage des verlegten Gitters hinsichtlich der Bodenoberfläche ist ebenfalls von grossem Einfluss. Bei günstiger Verlegungstiefe kann erreicht werden, daß die Bodenoberfläche praktisch trocken bleibt. Dadurch wird der Bewuchs derselben mit unerwüscheter Flora, speziell Moos, verhindert. Auch der Befall der Bodenoberfläche mit schädlicher Fauna, wie Schnecken, usw. wird reduziert.

Die im folgenden beschriebenen Versuche stellen spezielle Ausführungen der Erfindung und der Anwendungen der Anlage dar; naturgemäß können hier nur einige wenige solcher Ausführungsformen wiedergegeben werden.

Im Treibhaus eines Stadtgartens einer mitteleuropäischen Stadt wurden in zwei Beeten mit Schnittblumen in einer Tiefe von 30 cm zwei, bzw. ein durch Netze bzw. Gitter gebildete Elektroden der Dimensionen 4,5 x 1 m verlegt. Diese Gitter bestehen aus einem nicht verrottbarem Kunststoff-Trägermaterial mit einer Beschichtung aus leitendem Material, sind flexibel und weisen in der Mitte ein oder mehrere Lahn-Bänder aus phosphatiertem Kupfer, das noch versilbert ist, zur Stromzuführung auf.

Als Anode wurden zwei Erdungsleitungen an den Treibhauswänden verwendet.

Ohne Fremdspannung zeigte der mittels Litzen verbundene Stromkreis eine Spannung von 0,6 Volt und eine Stromstärke von 3,2 mA.

Bei Anlegen von 6 Volt Außenspannung stieg die Stromstärke auf 101 mA an.

Der Versuch wird mit 6 Volt Spannung gefahren; dabei zeigte es sich, daß die mittels dem erfindungsgemäßen Verfahren behandelten Beete praktisch nicht mehr begossen und gedüngt werden müssen und dies seit etwa 6 Monaten.

Auch vor dem Anschlienen der verlegten Gitter en die Erdungsleitungen konnte ein äußerst positiver Einfluß der genannten Gitter festgestellt werden; wurden - nach Verlegung der Gitter - die Beete bewässert, so zeigten die Beete mit Gitter ein zumindest doppelt so großes Wasserrückhaltevermögen, verglichen mit Beeten ohne Gitter. Das Beet blieb über den Gittern wesentlich länger feucht als an denjenigen Stellen, wo kein Gitter verlegt worden war.

Weiters wurde auf einer Atlantik-Insel der Versuch Baranco-Hondo gefahren:

In einem Ziergarten mit relativ trockenem, weil Wasser gut ableitendem Boden, wurde eine Gitterelektrode der Dimension 4,7 m x 46 cm in 24 cm Tiefe verlegt und an eine Ringwasserleitung als Erdung angeschlossen. Ohne Fremdspannung betrugen die elektrischen Werte 0,6 Volt und 2,2 mA; bei 6 Volt Fremdspannung 22 mA nach Inbetriebrahme und 48 mA 24 Stunden später.

Auch hier zeigte es sich, daß der mit dem Gitter versehene Streifen des Gartens wesentlich weniger oft begossen wurden mußte. Die Blumen auf diesem Streifen waren beispielsweise nach einer längeren Abwesenheit des Gutsbesitzers noch frisch, währenddem die gleichen Blumen in etwa 1 m Entfernung vom Gitter stark trockenheitsgeschädigt waren.

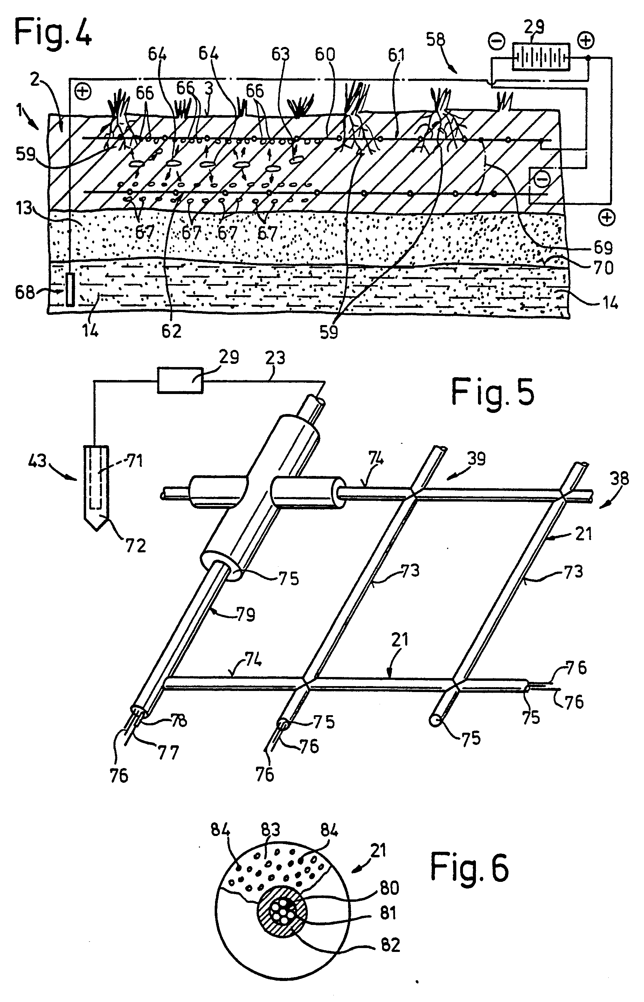

In Figur 3 ist, entsprechend den Teilanmeldung EP-A-02 00 936 (Anmeldenummer: 86 104 735.5), eine Anlage 47 zur Wassergewinnung bzw. zur gleichzeitigen Wasserversorgung von Pflanzen gezeigt. Diese Anlage 47 umfaßt eine, in einem tieferen wasserführenden Bodenbereich 14 durch einen Kohlestab 48 gebildete Elektrode 49 mit der die Feuchtigkeit im Bodenbereich 14 en positives Potential angelegt wird, sodaß dieser gesamte Boderbereich 14 als Anode 50 wirkt. Unterhalb der Bodenoberfläche 3 sind Elektroden 51, 52 angeondnet. Die Elektrode 51 wird durch ein Netz 53 - wie es in Figur 5 noch näher beschrieben werden wird - bzw. einen leitenden Kunststoff 54. mit dem Drainagerohre 55 beschichtet sind, gebildet. Unterhalb des Netzes 53 sind ebenfalls Drainagerohre 56 angeordnet. Werden die als Kathoden 57 verwendeten Elektroden 51, 52 mit der Anode 50 über ein Leitungssystem 23 zusammengeschaltet, so kommt es zwischen der Anode 50 und den Kathoden 57 zum Aufbau eines elektrischen Feldes, zu einem Stromfluß und somit zu einem Wassertransport aus der wasserführenden Bodenschicht 14 in Richtung der Drainagerohre 55 bzw. 56, wie dies mit Pfeilen 27 angedeutet ist. Das in dem Bodenbereich 13 hochsteigende Wasser wird zum Teil in Drainagerohren 55, 56 aufgefangen. Die übrige hochsteigende Bodenfeuchtigkeit wird dem Wurzelbereich der Pflanzen im Bereich der Bodenoberfläche 3 bzw. dem Vegetationsbereich 2 zugeführt. Eine derartige Anlage 47 wurde zu Versuchszwecken auf einer Atlantik-Insel betrieben:

In einem Gartenbaubetrieb mit relativ trockenem Boden wurden zwei Streifen Netze 53 bzw. Gitter der Dimensionen 4 m x 46 cm und 3 m x 46 cm in einer Tiefe von 22 cm verlegt. Angeschlossen wurden die Gitter an ein Eisenrohr, welches in eine Sickergrube verlegt wurde. Ohne äußere Fremdspannung ergab sich 0,55 Volt und 4,1 mA; bei Anschluß von 6 Volt Fremdspannung zeigten sich 24 mA nach der Inbetriebnahme, 41 mA nach zwei Stunden und 56 mA 6 Stunden später.

Auch hier waren die Auswirkungen des verlegten Netzes offensichtlich; die Kulturen über diesem Streifen mußten weniger begossen werden und machten allgemein einen frischeren Eindruck.

Unter einem Teil des 3 m langen Streifens wurde anschließend ein Drainagerohr aus Kunststoff mit einem Durchmesser von 5 cm verlegt. Der Gartenbaubetrieb liegt etwa 15 m über der Küste, sodaß angenommen werden kann, daß mindestens ein Teil der wasserführenden Schichten unter dem Versuchsgebiet Meerwasser enthalten. Im Drainagerohr wurde nun Meerwasser aufgefangen, welches klar war und praktisch keinen salzigen Eindruck beim Trinken hinterließ.

Mit ein Grund, warum das in den Drainagerohren 55 bzw. 56 aufgefangene Meerwasser beim Trinken keinen salzigen Eindruck hinterließ, liegt darin, daß durch die Elektrophorese Partikel negativer Ladung zur Anode 50 wandern. Nachdem Salze aus positiv geladenen Metallionen und einem negativ geladenen "Salzrest" aufgebaut sind, werden die Partikel verschiedener Ladung getrennt und die Partikel negativer Ladung, also die "Salzreste", wie z. B. Cl, $NO_3$ sowie $CH_3$, $PO_43$ sowie $Hco_3$ wandern zur Anode 50 und werden dort abgelagert.

In Figur 4 ist, entsprechend der Teilanmeldung EP-A-01 97 537 (Anmeldenummer 86 104 734,8), eine Anlage 58 gezeigt, wie sie zur Entsalzung von Böden 1, insbesondere im Vegetationsbereich 2, verwendet wird. Hierzu sind im Vegetationsbereich 2 zwischen den Wurzelenden 59 und der Bodenoberfläche 3 eine, durch ein Netz 60 gebildete Elektrode 61, angeordnet. Unterhalb der Wurzelenden 59 ist eine weitere, ebenfalls durch ein Netz 60 gebildete Elektrode 62, angeordnet. Im Vegetationsbereich sind nun, wie schematisch angedeutet, Schwermetalle 63 un Salze 64 vorhanden. Dies kommt insbesondere im Randbereich bzw. Mittelstreifenbereich von stark befahrenen Straße durch die Salzstreuung bzw. Mittelstreifenbereich von Niederschlag, der Autoabgase sehr häufig vor. Wird nun die Elektrode 62 an positives und die Elektrode 61 an negatives Potential einer Energiequelle 23, beispielsweise einer Batterie 65, gelegt, so kommt es zu einer Elektrophorese bzw. Elektrolyse. Die positiven Metallionen, nämlich die Kationen 66, wie z. B. K+, $Cu^{2+}$, $PB^{2+}$, Na+ und $Ca^{2+}$ wandern folglich zu der an negatives Pontential angeschlossenen Elektrode 61 und lagern sich, wie weiters schematisch angedeutet, an dem diese Elektrode 61 bilden Netz 60 ab.

Der negativ geladene Salzrest, nämlich die Anionen 67 und die Hydroxydionen, wie z. B. Cl-, $No_3^-$, $Po_43-$, $So_42-$, $Hco_3^-$, Coo-, Oh- sowie $Ch_3^-$ wandern dagegen in Richtung des tieferen Bodenbereiches 13 zu der an positives Potential angeschlossenen Elektrode 62 und werden dort abgelagert.

Durch das zwischen den beiden Elektroden 61, 62 aufgebaute intensive elektrische Feld tritt in kurzer Zeit eine Entsalzung dieses Bodenbereiches auf, da die Salze in tiefere Bodenschichten abwandern. Gleichzeitig werden die Schwermetalle an der Elektrode 61 abgeschieden und bei entsprechender Ausgestaltung des Netzes 60 dort niedergeschlagen, sodaß sie nicht mehr in Lösung gehen können.

Im Anschluß an diese Sanierungsmaßnahme kann zur Sanierung der Pflanzen bzw. zur Neubepflanzung eine Elektrode 68 in tieferen wasserführenden Bodenschichten 14 angeordnet und an positives Potential - wie mit strichpunktierten Linien angedeutet - angeschlossen werden. Die beiden Elektroden 61, 62 werden dann an negatives Potential angeschlossen und dienen beide als Elektroden. Bevorzugt werden hierbei die beiden Gitter 60 der Elektroden 61 und 62, wie ebenfalls mit strichlierten Linen angedeutet, durch eine Verbindungsleitung 65 miteinander verbunden, sodaß sie am gleichen Potential liegen. Damit kann es zu keiner elektrochemischen Verseuchung durch pH-Wert-Unterschiede im Bereich der beiden Elektroden 61 und 62 kommen.

Nach Einschaltung der Elektrode 68 und der Kontaktierung des wasserführenden Bodenbereiches 14 als Anode 70 wandern die ursprünglich im Bereich der Elektrode 62 abgelagerten Anionen 67, nämlich die "Salzreste" weiter in Richtung der tieferliegenden Bodenschichten 14 und werden im Bereich dieser wasserführenden Bodenschicht abgelagert. Damit werden sie aus dem Vegetationsbereich völlig entfernt. Gleichzeitig tritt bei Verwendung der Anlage in der zuletzt beschriebenen Art ein verstärkter Wassertransport in Richtung der Wurzelenden 58 auf, sodaß nach der Sanierung des Vegetationsbereiches 2 ein beschleunigtes Pflanzerwachstum eintritt bzw. Neupflanzungen sich nach kurzer Zeit positiv entwickeln können.

Durch eine derartige Anordnung der Elektroden und den Betrieb der Anlage ist es möglich, sowohl Geestlandschaften als auch Trockengebiete mit großem Salzgehalt zu bepflanzen bzw. die Bepflanzung im Bereich von Straßenrändern, die durch die Streusalzablagerung schwer geschädigt ist, zu sanieren bzw. unter Ausschaltung der schädlichen Salzeinwirkungen zu erneuern.

In Figur 5 ist das die Kathode 38 bildende Netz 39, welches mit einem Leitungssystem 22, beispielsweise unter Zwischenschaltung einer Energiequelle 29 mit einer Elektrode 43 verbunden ist, gezeigt. Die Elektrode 43 kann anstelle der in Figur 2 gezeigten Ausfünrngsform durch einen Metallstab 71 gebildet sein, der mit einem elektrisch leitenden Kunststoff 72 umgeben ist.

Das Netz 39 besteht aus einzelnen Fäden 73, 74, die zugleich die Verteilungsleitungen 21 bilden. Diese Fäden 73, 74 können aus einem leitenden Kunststoff 75 bestehen, der in der Art eines Duroplastes mit einem makromolekularem Aufbau gebildet ist und z. B aus einem Acrylat mit mindestens zum Teil vernetzten Polymeren besteht. In diesem Kunststoff 75 können Fäden 76 aus Karbon bzw. die Fäden 77 aus Metall, die vorzugweise mit einer Silberbeschichtung 78 versehen sind, eingebetter sein. Diese Fäden 76, 77 sind zur Leitwerterhöhung zumindest in eine Stromversorgungsleitung 79, die das Netz 39 mit dem Leitungssystem 23 verbindet, eingebettet.

Selbstverständlich ist es, wie dies schematisch in Figur 5 weiters angedeutet ist auch möglich, daß die Karbon- und Metellfäden 76, 77 in einen beliebigen Kunststoff, z. B. Polyamid, Acryl, Polyester oder dgl., zum Bilden der Fäden 73 bzw. 74 des Netzes 39 eingebettet werden können. Das Netz wird, wie dies schematisch an einem Teil des Netzes 39 angedeutet ist, in einem leitenden Kunststoff 75 eingebettet. Durch diese Ausbildung des Netzes 39 wird neben einer guten Leitfähigkeit über eine große Fläche ein mechanisch widerstandsfähiger Baukörper geschaffen, der auch beim Einbau in Vegetationsbereichen bzw. Bodenschichten beim Befahren mit Bearbeitungsmaschinen nicht verletzt bzw. zerstört werden kann.

In Figur 6 ist eine Verteilungsleitung 21 gezeigt, die einen aus einer Vielzahl von Einzellitzen zusammengesetzten Leiter 80 aus Metall 81 bzw. Karbonfasern umfaßt. Dieser Leiter 80 ist mit einer Silberschicht 82 umgeben und in einem leitenden Kunststoff 83 in der Art eines Duroplastes mit einem makromolekularen Aufbau, z. B. in einem Acrylat mit mindestens zum Teil vernetzten Polymeren eingebettet.

Der Vorteil der erfindungsgemäß verwendeten Kunststoffe 72, 75 bzw. 83 liegt darin, daß diese Kunstharz-Dispersionen, Kunstharz-Lösungen oder Kunstharze mit Metall- oder Halbmetallverbindungen oder deren Lösungen in einer Menge versetzt enthält, sodaß auf ein Kunstharz-Molekül annähernd ein Metall- oder Halbmetallatom kommt und der, nach dem Mischen und der Zugabe von Reduktionsmittel in geringem Überschuß oder durch an sich bekannte thermische Zersetzung Metall oder Halbmetallatome enthält und bei dem gebildete oder noch vorhandene Ionen ausgewaschen und die Dispersionen, Lösungen oder Granulate mit Graphit oder Ruß versetzt weiterverarbeitet sind. Überraschend ist bei dem Einsatz derartiger Kunststoffe, daß sie gegenüber mechanischen und thermischen Beanspruchungen wesentlich widerstandsfähiger sind, da die Leitfähigkeit unabhängig von den im Kunststoff eingebetteten freischwebenden Leiterteilchen 84 - wie schematisch über einen Teil des Kusntstoffes 83 dargestellt - ist, d.h. die leitende Verbindung im Kunststoff wird nicht über die Leiterteilchen 84, sondern durch das Anhaften der Silberionen in den Hohlräumen der großen Kunststoffmoleküle erreicht, wobei durch das Reduzieren der Silberionen der Kunststoff Halbleitereigenschaften annimmt. Dadurch ist es möglich, mit einem Graphitpulveranteil in einer Menge von 40 %, bezogen auf den Kunststoff, auszukommen, um den leitenden Kunststoff in seinen Eigenschaften auf das Anwendungsgebiet bei erfindungsgemäßen Verteilungsleitungen einzustellen.

Die Details eines derartigen Kunststoffes sind in der österreichischen Patentschrift Nr. 313 588 beschrieben.

Derartige Kunststoffe sind nicht nur resistent gegenüber chemischen und elektrochemischen Einflüssen, sondern weisen auch eine hohe Alterungsbeständigkeit auf, da sie keine Ionen enthalten und sich dadurch bei Einwirkung von elektrischen Strömen kaum verändern.

Die vorstehend beschriebenen Kunststoffe sind in Verbindung mit den verschiedenen, in den Figuren 1 bis 4 gezeigten Ausführungsbeispielen mit Vorteil anwendbar und haben sich bei den vorstehend beschriebenen Versuchen außerordentlich bewährt. Ein weiterer Vorteil dieser Kunststoffe liegt darin, daß sie eine hohe Oberflächenadhäsion und Oberflächenrauhigkeit

aufweisen, sodaß die Schwermetallionen bzw. die aus den Salzen ausgeschiedenen Kationen an diesem Kunststoff anhaften und gebunden werden, sodaß sie dem Vegetationsbereich voll entzogen sind.

Selbstverständlich ist es im Rahmen der Erfindung auch möglich, die durch Verteilungsleitungen 22 gebildeten Elektroden 21 quer zur Längsrichtung derselben mittels Distanzhalter im Abstand zu verbinden, sodaß beim Einbringen in die Bodenbereiche ein etwa gleichmäßiger Abstand zwischen den Verteilungsleitungen 22 eingehalten werden kann. Damit ergibt sich zwar ebenfalls eine netz- bzw. gitterförmige Anordnung, jedoch besteht der Unterschied darin, daß die leitende Verbindung überwiegend in Längsrichtung der einzelnen Verteilungsleitungen gegeben ist. Es wird jedoch auch bei dieser Ausführungsform notwendig sein, in gewissen größeren Abständen Querverbindungen zwischen den einzelnen Verteilungsleitungen 22 herzustellen, um bei einer Unterbrechung einer dieser Leitungen eine By-Pass-Wirkung über eine andere Verteilungsleitung herstellen zu können. Weiters ist es sehr wesentlich, daß die Verteilungsleitungen bzw. die zum Einsatz kommenden Netze äußerst flexibel und spannungsfrei sind, sodaß es beim Verformen derselben nicht zum Aufbau einer Rückfederungskraft kommt.

**Patentansprüche**

1. Anlage zum Aufbau eines elektrischen Feldes im Erdboden mit wenigstens zwei im Abstand voneinander unter der Erdoberfläche verlegten Elektroden, wobei wenigstens eine Elektrode (21, 37, 51, 52, 61, 62) in einem der Bodenoberfläche (3) benachbarten Bodenbereich (2) des Bodens (1) und wenigstens eine weitere Elektrode (24, 43, 49, 68) in einem in größerem Abstand von der Bodenoberfläche (3) befindlichen, relativ wasserreicheren tieferen Bodenbereich (14) angeordnet ist und wenigstens eine der Elektroden aus wenigstens einem Netz von Leitern gebildet und großflächig ausgelegt ist, dadurch gekennzeichnet, daß die Leiter der Elektrode eine leitende Kunststoffummantelung aufweisen, in der ein gegebenenfalls leitender Kunststoff als Trägermaterial eingebettet ist, oder in der Karbon- oder Metallfäden eingebettet oder in der ein gegebenenfalls leitender Kunststoff und Karbon- oder Metallfäden eingebettet sind, wobei die leitende Kunststoffummantelung wie etwa ein Duroplast mit einem makromolikularen Aufbau, z. B. ein Acrylat mit mindestens zum Teil vernetzten Polymeren, eine hohe Leitfähigkeit und einen geringen Übergangswiderstand zum Erdreich aufweist.

2. Anlage nach Anspruch 1, dadurch gekennzeichnet, daß die der Bodenoberfläche (3) benachbarte Elektrode (21, 37, 61), insbesondere die Kathode (20, 38), im Vegetationsbereich (2) des Bodens (1) zwischen den Wurzelenden (28, 59) der Pflanzen (8, 42) sowie der Bodenoberfläche (3) angeordnet ist.

3. Anlage nach Anpruch 1 oder 2, dadurch gekannzeichnet, daß im Vegetationsbereich (2) des Bodens (1) mehrere parallel zueinander verlaufende Kathoden (20) bildende Elektroden (21) angeordnet sind, wobei jeweils mehrere Kathoden (20) über das Leitungssystem (23) mit einer in einem tieferen, wasserführenden Bodenbereich (14), z. B. in einem Brunnen (16) angeordneten Anode (25) zusammengeschaltet sind.

4. Anlage nach einem der Ansprüche 1 bis 3, dadurch gekennzeichnet, daß die die Kathode (20, 38) bildende Elektrode (21, 37, 61) in Blumenbeeten und bzw. oder Gemüsebeeten (33) bevorzugt in einem Abstand (34) von ca. 20 bis 40 cm unterhalb der Bodenoberfläche (3) angeordnet ist.

5. Anlage nach einem der Ansprüche 1 bis 4, dadurch gekennzeichnet, daß vorzugsweise zwischen der Anode (25, 44, 70) und der Kathode (20, 38, 57) eine Energiequelle (29) mit einer Spannungsabgabe von 6 Volt und einer Stromabgabe von ca. 50 mA angeordnet ist.

6. Anlage nach einem der Ansprüche 1 bis 5, dadurch gekennzeichnet, daß zwischen der Kathode (57) und der im tieferen Bodenbereich (14) angeordneten Anode (50) Drainagerohre (56, 55) angeordnet sind.

7. Anlage nach einem der Ansprüche 1 bis 6, dadurch gekennzeichnet, daß eine die Kathode bildende Elektrode (61) im Bereich der Wurzeln und eine weitere, wahlweise eine Anode oder Kathode bildende Elektrode (62) in einem tieferen, den Wurzelenden (59) nahe benachbarten Bodenbereich und eine, die Anode (70) bildende Elektrode (68) in dem tieferen, insbesondere wasserführenden Bodenbereich (14) angeordnet ist.

8. Anlage nach Anspruch 1, dadurch gekennzeichnet, daß der die Leiter (80) bzw. Karbon- oder Metallfäden (76, 77) umgebende bzw. die Verteilungsleitungen (22) und bzw. oder das Netz (39, 60) bildende leitende Kunststoff (83, 75) Kunstharz-Dispersionen, Kunstharz-Lösungen oder Kunstharze mit Metall- oder Halbmetallverbindungen oder deren Lösungen in einer Menge versetzt enthält, so daß auf ein Kunstharz-Molekül annähernd ein Metall- oder Halbmetallatom kommt und der nach dem Mischen und der Zugabe von Reduktionsmittel in geringem Überschuß oder durch an sich bekannte thermische Zersetzung Metall oder Halbmetallatome enthält und bei dem gebildete oder noch vorhandene Ionen ausgewaschen und die Dispersionen, Lösungen oder Granulate mit Graphit oder Ruß versetzt weiterverarbeitet sind, wobei vorzugsweise dem leitenden Kunststoff (53, 75) Graphitpulver in einer Menge bis zu 40 %, bezogen auf den Kunststoff, zugesetzt ist.

9. Anlage nach einem der Ansprüche 1 bis 8, dadurch gekennzeichnet, daß die Oberfläche des Netzes (39, 60) bzw. der Verteilungsleitungen (22) eine Adhäsion und eine Oberflächenrauhigkeit aufweist, so daß Metallionen anhaften.

10. Anlage nach einem der Ansprüche 1 bis 9, dadurch gekennzeichnet, daß die Maschenweite des Netzes (39) an die Wurzeldichte bzw. -dicke angepaßt und bei größeren Pflanzen, wie Sträuchern (6) und Bäumen (5) das Netz eine größere Maschenweite aufweist.

11. Anlage nach einem der Ansprüche 1 bis 10, dadurch gekennzeichnet, daß im Leitungssystem (23) zwischen der Kathode (20, 38, 57) und der Anode (25, 44, 50, 70) eine Energiequelle (29), z. B. eine Sonnenenergiezelle (30) und bzw. oder ein Energiespeicherelement, z. B. eine Batterie (31), angeordnet ist.

## Claims

1. Installation for establishing an electrical field in the soil, comprising at least two electrodes laid below the soil surface with mutual spacing, at least one electrode (21, 37, 51, 52, 61, 62) being situated in a soil section (2) of the soil (1) close to the soil surface (3), and at least one other electrode (24, 43, 49, 68) being situated in a deeper soil section (14) situated at a greater distance from the soil surface (3) and comparatively richer in water, and at least one of the electrodes being formed by a grid or network of conductors and arranged over a larger area, characterised in that the conductors of the electrode comprise a conductive plastics material sheathing in which a possibly conductive plastics material is imbedded as a carrier material, or in which carbon or metal threads or filaments are imbedded, the conduktive plastics material sheathing such as say a duroplast having a macromolecular structure, e.g. an acrylate comprising at least partially reticulated polymers, having a high degree of conductivity and a low contact resistance with respect to the soil.

2. Installation according to claim 1, characterised in that the electrode (21, 37, 61) close to the soil surface (3), being the cathode in particular (20, 38), is arranged in the vegetation section (2) of the soil (1) between the root extremities (28, 59) of the plants (8, 42) and the soil surface (3).

3. Installation according to claim 1, characterised in that several electrodes (21) forming cathodes (20) extending parallel to each other are situated in the vegetation section (2) of the soil (1), several cathodes (20) being connected in each case via the conductor system (23) to an anode (25) situated in a deeper water-carrying section (14) of the soil, e.g. within a well (16).

4. Installation according to one of the claims 1 to 3, characterised in that the electrode (21, 37, 61) forming the cathode is situated in flower beds and/or vegetable beds (33), preferably at a distance (34) of say 20 to 40 cms below the soil surface (3).

5. Installation according to one of the claims 1 to 4, characterised in that a power source (29) delivering a voltage of 6 volts and a current of say 50 mA is preferably installed between the anode (25, 44, 70) and the cathode (20, 38, 57).

6. Installation according to one of the claims 1 to 5, characterised in that drain pipes (56, 55) are situated between the cathode (57) and the anode (50) situated in the deeper soils section (14).

7. Installation according to one of the claims 1 to 6, characterised in that an electrode (61) forming the cathode is situated in the region of the roots and another electrode (62) optionally forming an anode or cathode is situated in a deeper soil section closely adjacent to the root extremities (59), and an electrode (68) forming the anode (70) is situated in the deeper soil section (14) which is water-bearing in particular.

8. Installation according to claim 1, characterised in that the plastics material (83, 75) surrounding the conductors (80) or rather carbon or metal threads (76, 77), or forming the distribution conductors (22) and/or grid (39, 60) contains synthetic resin dispersions, synthetic resin solutions or synthetic resins with metal or metalloid compounds or their solutions added in a quantity such that approximately one metal or metalloid atom is allocated per synthetic resin molecule, and which contains metal or metalloid atoms after mixing and addition of reducing agents to slight excess or because of essentially known thermal decomposition, and in which formed or still present ions are elutriated and the dispersions, solutions or granulates are processed further with the addition of graphite or carbon black, graphite powder being added to the conductive plastics material (83, 75), preferably in a quantity of up to 40 % with respect to the plastics material.

9. Installation according to one of the claims 1 to 8, characterised in that the surface of the grid (39, 60) or of the distribution conductors (22) has an adhesivity and surface roughness such that metal ions adhere to the same.

10. Installation according to one of the claims 1 to 9, characterised in that the mesh width of the grid or network (39) is adapted to the density or thickness of the roots and that the grid has a greater mesh width in the case of large plants, such as bushes (6) and trees (5).

11. Installation according to one of the claims 1 to 10, characterised in that a power source (29), e.g. a solar power cell (30) and/or a power storage element, e.g. a battery (31), is installed in the conductor system (23) between the cathode (20, 38, 57) and the anode (25, 44, 50, 70).

## Revendications

1. Installation pour l'établissement d'un champ électrique dans le sol comportant au moins deux électrodes distantes l'une de l'autre, disposées sous la surface du sol, au moins une électrode (21, 37, 51, 52, 61, 62) se trouvant dans une zone (2) du sol (1) voisine de la surface du sol (3) et au moins une autre électrode (24, 43, 49, 88) se trouvant dans une zone (14) du sol plus profonde, situés à plus grande distance de la surface (3) du sol et relativement plus aquifère, et au moins l'une des électrodes étant formée par au moins un réseau de conducteurs et étant de grandes dimensions, caractérisée en ce que les conducteurs de l'électrode présentent un revêtement conducteur en matière plastique dans lequel une matière plastique éventuellement conductrice est incluse en tant que support, ou dans lequel des fils de carbone ou métalliques sont inclus, ou dans lequel une matière plastique éventuellement conductrice et des fils de carbone ou métalliques sont inclus, le revêtement conducteur en matière plastique tel que par exemple une résine thermodurcissable à structure macromoléculaire, par exemple un acrylate comportant des polymères au moins en partie réticulés, présentant une conductivité élevée et une résistance de contact très faible vis-à-vis du terrain.

2. Installation selon la revendication 1, caractérisée en ce que l'électrode (21, 37, 61) voisine de la surface (3) du sol, en particulier la cathode (20, 38) est disposée dans la zone de végétation (2) du sol (1) entre les extrémités (28, 59) des racines des plantes (8, 42) et la surface (3) du sol.

3. Installation selon la revendication 1 ou la revendication 2, caractérisée en ce que plusieurs électrodes (21) parallèles formant des cathodes (20) sont disposéss dans la zons de végétation (2) du sol (1), plusieurs cathodes (20) étant reliées à chaque fois par l'intermédiaire du système conducteur (23) à une anode (25) disposée dans une zone du sol plus profonde et aquifère (14), par exemple dans un puits (16).

4. Installation selon l'une des revendications 1 à 3, caractérisée en ce que l'électrode (21, 37, 61) formant la cathode (20, 38) est disposée dans des parterres de fleurs et/ou dans des planches de légumes (33) de préférence à une distance (34) d'environ 20 à 40 cm au dessous de la surface du sol (3).

5. Installation selon l'une des revendications 1 à 4, caractérisée en ce qu'une source d'énergie (29) fournissant une tension de 6 V et un courant d'environ 50 mA est disposée de préférence entre l'anode (25, 44, 70) et la cathode (20, 38, 57).

6. Installation selon l'une des revendications 1 à 5, caractérisée en ce que des tubes de drainage (56, 55) sont disposés entre la cathode (57) et l'anode (50) située dans la zone (14) du sol plus profonde.

7. Installation selon l'une des revendications 1 à 6, caractérisée en ce qu'une électrode (61) formant la cathode est disposée dans la zone des racines, en ce qu'une autre électrode (62) formant au choix une anode ou une cathode est disposée dans une zone du sol plus profonde voisine des extrémités (59) des racines et en ce qu'une électrode (68) formant l'anode (70) est disposée dans la zone (14) du sol plus profonde, en particulier aquifère.

8. Installation selon la revendication 1, caractérisée en ce que la matière plastique conductrice (83, 75) qui entoure les conducteurs (80) ou les fils de carbone ou métalliques (76, 77) ou qui forme les conduites de distribution (22) et/ou le réseau (39, 60), contient en mélange des dispersions de résines synthétiques, des solutions de résines synthétiques ou des résines synthétiques mélangées à des composés métalliques ou semi-métalliques ou à des solutions de ces composés de telle sorte qu'un atome métallique ou semi-métallique vient au voisinage d'une molécule de résine synthétique, que la matière plastique contient des atomes métalliques ou semi-métalliques après l'opération de mélange et l'addition de réducteurs en très faible excés ou par décomposition thermique connue en soi, que les ions formés ou encore présents dans la matière plastique sont éliminés par lavage et que les dispersions, solutions ou granulés sont travaillés de nouveau en mélange avec du graphite ou du noir de carbone, de la poudre de graphite étant de préférence ajoutée à la matière plastique conductrice (83, 75) en une quantité de jusqu'à 40 % par rapport à la matière plastique.

9. Installation selon l'une des revendications 1 à 8, caractérisée en ce que la surface du réseau (39, 60) ou des conduites de distribution (22) présente une adhésion et une rugosité superficielle, de sorte que les ions métalliques y adhèrent.

10. Installation selon l'une des revendications 1 à 9, caractérisée en ce que la maille du réseau (39) est adaptée à la densité ou à la grosseur des racines et que, dans le cas de plantes de grandes tailles, comme des buissons (6) et des arbres (5), le réseau présente une maille plus grande.

11. Installation selon l'une des revendications 1 à 10, caractérisée en ce qu'une source d'énergie (29), par exemple une cellule à énergie solaire (30) et/ou un élément accumulateur d'énergie, par exemple une batterie (31), est disposée dans le système conducteur (23) entre la cathode (20, 38, 57) et l'anode (25, 44, 50, 70).

0 087 663

Fig. 1

Fig. 2

Fig. 3

1

# Fig.4

# Fig.5

# Fig.6